# EUROPEAN PATENT SPECIFICATION

(11) **EP 1 985 168 B1**
(45) Date of publication and mention of the grant of the patent: **01.09.2010**
(21) Application number: 08154984.2
(22) Date of filing: 23.04.2008
(51) Int. Cl.: A01B 71/06, A01D 41/16

(54) **Device for remotely coupling a combine feeder and a combine header via a stationary gearbox**
Vorrichtung zur Fernkopplung eines Mähdrescherförderers und Mähdrescherschneidwerks mittels eines stationären Getriebegehäuses
Dispositif de couplage à distance d'une alimentation combinée et d'un en-tête combiné via une boîte de vitesses stationnaire

(30) Priority: 23.04.2007 US 788954
(43) Date of publication of application: 29.10.2008
(73) Proprietor: CNH Belgium N.V., 8210 Zedelgem (BE)
(72) Inventor: Ricketts, Jonathan E., Ephrata, PA 17522 (US); Wagner, Bradley J., Wrightsville, PA 17368 (US)
(74) Representative: CNH IP Department

(56) References cited:
- EP-A- 1 444 881
- EP-A- 1 884 151
- DE-A1- 2 124 341
- DE-A1- 2 724 245

## Description

The present invention relates to the drive-train coupling of combine feeder interfaces and combine headers; and it particularly relates to remotely coupling the same via a stationary gearbox.

Today's combine harvesters are equipped with removal headers, designed for particular crops. There is the standard header or grain platform, which is used for many crops including grain, legumes and many seed crops. There are also draper headers, pickup headers, corn headers, sunflower headers, etc. The headers are generally interchangeable and made to fit combine feeder interfaces through which the crop enters the feeder housing and can advance into the combine.

Conventionally, combine feeder housings are equipped with quick-connect coupling mechanisms at the interface between the feeder and the header. The quick-connect mechanism enables an operator, standing outside of the combine, to manually exchange one header for another, and to manually latch the feeder to the header. For example, attached to the back of each header are two (left and right of centre) quick-connect latches. Attaching the combine feeder housing to these header latches is accomplished by an operator driving the combine up to a header, hydraulically lowering the combine's feeder housing, and driving the combine forward until the feeder housing's interface, which is equipped with two quick-connect yokes, contacts the header latches. Then the combine's feeder housing is hydraulically lifted, allowing the quick-connect yokes, on the feeder interface, to slide up and against the quick-connect latches on the header, and thereafter the header can be raised in concert with raising the feeder. However, it is still necessary thereafter for the operator to leave the cab in order to latch and lock the drive train. That is, the operator must connect, by hand, various drive belts, chains, and hydraulic hoses in order to couple the header drives with the feeder drives.

A straightforward coupling mechanism for a header drive is shown in DE 2 124 341. The drive shaft of the header is provided with a cup on a telescoping shaft portion that is aligned with a short drive shaft on the feeder housing when the header is mounted onto this housing. The operator has to step down from his platform to release the shaft end, such that an inner spring can push the cup towards the drive shaft of the feeder. The cup is provided with a pair of notches which receive protrusions on the feeder drive shaft to transmit power from the combine onto the header. Thus a manual intervention is needed. Also the uncoupling action requires a manual intervention of the operator: he has to push back the telescoping shaft portion of the header drive shaft until a pin slides into the telescoping part to secure it in the outward position.

EP-A-1 884 151 discloses an automatic header latching mechanism for connecting the feeder drive and header drive. However its operation requires that the gearbox slide back and forth along the feeder interface.

A new coupling device which negates manual intervention, during the feeder housings coupling to and uncoupling from the combine header drive mechanisms, using a stationary gearbox, would satisfy a long felt need, and represent a substantial advancement in the art.

According to the invention there is provided a combination of an agricultural harvesting machine and a header, comprising:
an in-line gearbox secured at a feeder interface of the harvesting machine and comprising a short splined jack shaft extending from the gearbox along a line coaxially directed towards an extension of a drive shaft of the header; and
a remote latching and drive-coupling device for connecting the header to the feeder interface,
**characterised in that**:
the in-line gearbox is fixedly secured against motion which would be coaxial with the short jack shaft extending therefrom; and
the drive-coupling device comprises:
   a first coupling member extending from the short splined jack shaft along a line coaxially directed towards the extension of the drive shaft of the header and comprising a matingly splined sleeve having extending therefrom a jack shaft extension extending in-line from said sleeve along an axis coaxial with the short jack shaft enabling a telescopic extension movement of the first coupling member telescopically extending the reach of the short jack shaft;
   a second coupling member constituting the extension of the drive shaft of the header, having at its distal end an oversized mouth portion and being matingly splined to receive and secure the telescopically moving first coupling member into the second coupling member; and
   an actuator operatively connected to the first coupling member for remote control of the telescopic extension movement of the first coupling member from a cab of the harvesting machine.

The present invention permits a combine operator to automatically connect the combine's feeder PTO shaft to the combine's header drive shafts without leaving the cab of the combine. This automatic coupling device comprises a stationary in-line gearbox having a telescopically extendible jack shaft, which jack shaft's telescopic action may be initiated by a shift fork assembly having pneumatic, electronic and/or hydraulic actuators triggered from the cab of the combine. The telescopic jack shaft rotatably extends from the gearbox, in-line along either side of the feeder interface, so as to be in alignment with and engageable to the oversized receivable coupler element, which coupler transfers power from the feeder drive to the header drive. In alignment therewith, but extending from the opposite side of the feeder housing from where the gearbox is located, there may be a second but longer shaft extending from the gearbox to a point where it is insertable in a matching oversize receivable coupler element. Said second but longer shaft may also be telescopically actuated by a fork shift, as a first coupling, to extend into the oversized receivable or second coupling member.

The header can be lifted by driving a combine up to it and lifting its feeder. When the feeder is lifted, the header's interface tilts into the feeder adapter interface, is latched, and the drives can then be coupled from the instrument panel in the cab of the combine.

The telescopic jack shafts on the gearbox, when actuated by shift fork assemblies, will engage the oversized receivable header coupler members on one or both sides of the feeder. The shift fork assemblies can also activate a header latch pin locking and unlocking mechanism which cooperates along a line substantially parallel to but separate from the gearbox line. The couplings of the present invention can be spring-loaded to fully engage or disengage from the header drive shafts as a consequence of slowly rotating the combine feeder drive shaft in one direction or the other. Electronic initiation and modulation will safeguard against either premature engagement or premature disengagement of the latching and coupling system.

Embodiments of the invention will now be described in further detail, by way of example only, with reference to the accompanying drawings, in which:
Figure 1 is a side view of a combine harvester coupled to a header with the coupling mechanism of the present invention mounted on one side of the combine's feeder housing interface with the header;
Figure 2 is a close-up frontal view of the coupling mechanism of the present invention, showing the telescopic jack shaft extending from the gearbox, through the shift fork, and entering the receivable coupling members located on a header drive line;
Figure 3 is a right frontal perspective view of the device of the present invention secured to the feeder interface of a combine harvester, prior to coupling with a header;
Figure 4 is a direct frontal view of the device of the present invention and the feeder interface uncoupled from the header drive;
Figure 5 is a direct frontal views of the device of the present invention and the feeder interface, when coupled to the header drive;
Figure 6 is a direct frontal view of the feeder interface and the device of the present invention with the latch pin unlatched;
Figure 7 is a bottom view of the latch pin cable and uncoupled device of the present invention;
Figure 8 is a perspective view of the bottom of the shift fork element of the present invention; and
FIG 9 is a top view of a single cylinder and pivot arm embodiment for actuating the shift fork of the present invention.

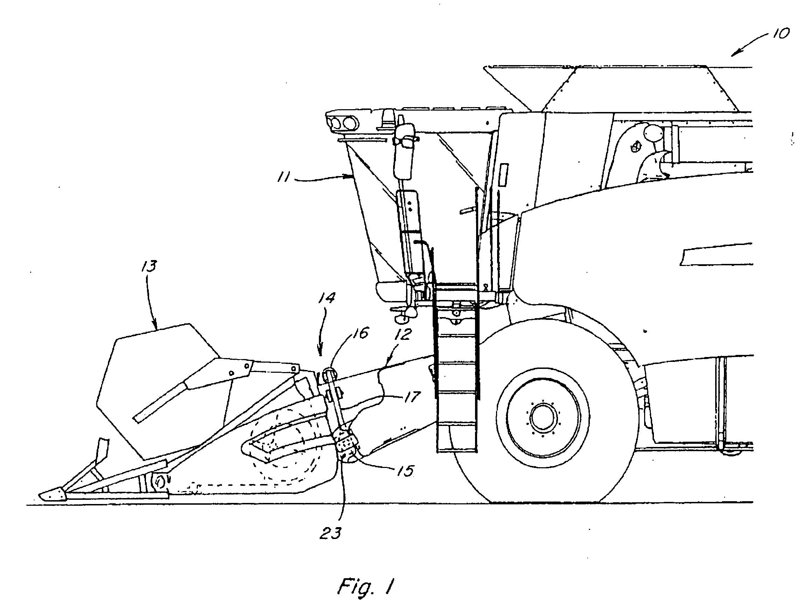

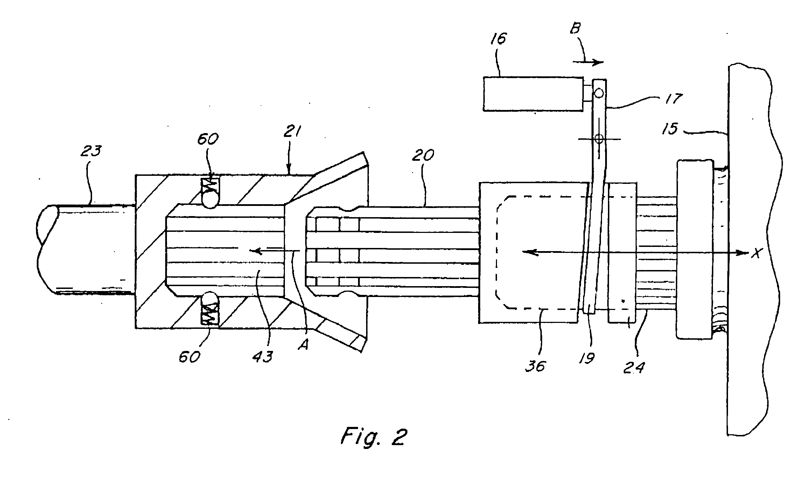

Referring now to Figures 1, 2 and 3, in accordance with the present invention, the operator can drive a combine harvester 10 up to and lift header 13, and from cab 11 activate shift fork assembly 14 by pushing a button or throwing a switch or touching a screen to cause the header 13 and feeder 12 to couple their respective drive trains to one another. That is to say, cylinder 16, by extension, causes its plunger arm at 18 to move shift fork 17 in the direction B to effectively couple the feeder 12, via shaft 20, to the header 13, via oversized receivable coupling member 21, and effectively connecting the drive from gearbox 15 with the header drive line 23. The combine's drive power is transferred via gearbox 15, as shown in Figure 2, to a short jack shaft 24, which is splined in order to engagingly receive a matingly splined sleeve 36 having another splined jack shaft 20 extending from sleeve 36, which together with sleeve 36 can telescopically extend the reach of jack shaft 24. Together these telescopically extendable elements 20 and 36 form a first coupling member and are engagingly extending the drive power of a combine feeder drive line 24. The header drive line 23 has affixed at its distal end, a second coupling member 21 known as the oversized receivable element, which has an enlarged angular mouth and an internally splined socket 43 for matingly and engagingly receiving jack shaft 20. Actuator cylinder 16 is controlled from cab 11 so as to move the top of shift fork 17 in the direction of B, which will tilt the bottom of shift fork 17, to telescopically move the first coupling member via shaft 20 in the direction A towards socket 43 of the header drive line 23. It is also noted that spring loaded retainers 60 will serve to secure the connection between the splined shaft and the matingly splined receivable socket 43.

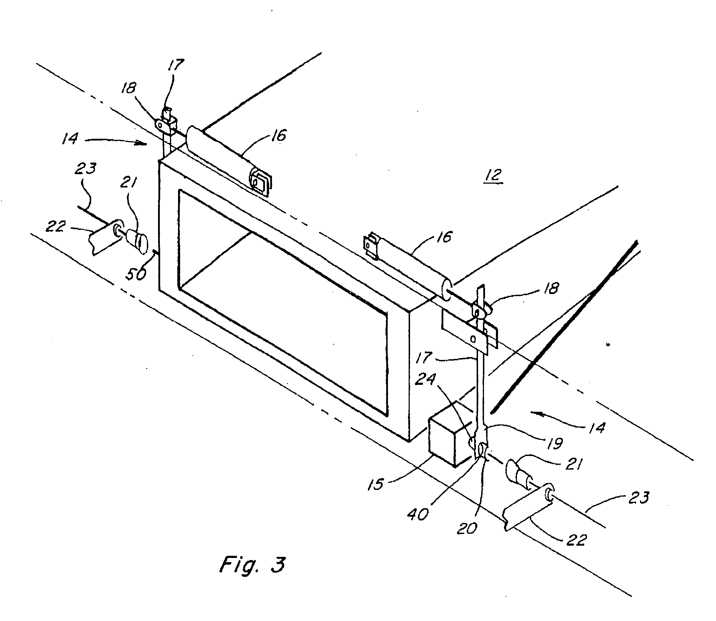

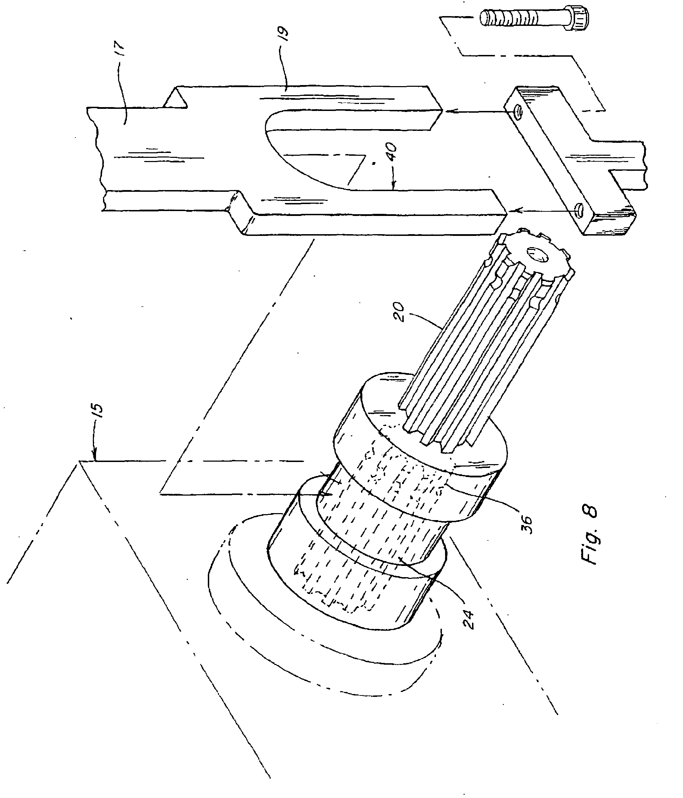

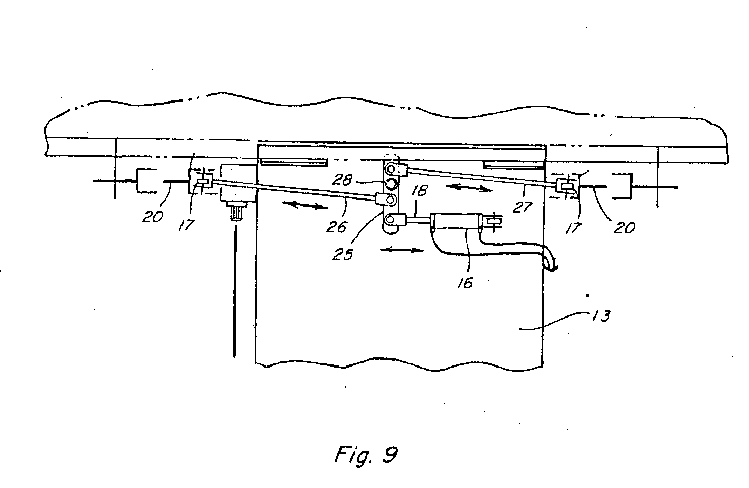

Referring now more specifically to Figure 3, the elements of the shift fork assembly 14 to be affixed along the two opposite sides of the feeder housing 12 interface are shown. That is, gearbox 15 is stably fixed at the right bottom side of the feeder 12 inlet or as we have previously referred to it, the interface. Gearbox 15 is fixedly secured, at the combine's feeder 12 interface, against moving in any direction which would be coaxial with the drive shafts extending from the gearbox. The hydraulic cylinders 16 may be positioned at the top of the feeder housing 12 interface with rods 18 extending therefrom laterally to connect with shift forks 17 that extend downwardly from the rod 18 and cylinder 16 actuators. Alternatively, (as in Figure 9) there may be a single actuator cylinder 16, connected to pivot an arm 25 for actuating the first coupling jack shaft 20 on each side of feeder 13. Arm 25 is pivotable about a pivot 28 arranged between the connection points of rods 26, 27 which link the actuator cylinder to shift forks 17. At the bottom of shift forks 17 are the fork sections having prongs 19 which define an opening 40 (See Figure 8). Short jack shaft 24 extends from gearbox 15 in the direction of shift fork 17, through opening 40 while long shaft 50 extends from gearbox 15 in the opposite direction. Drive line 23 of the header 13 is supported by bracket 22 of the header. Telescopic shaft 20 having splines is insertable into the receivable mouth of coupling member 21 having matching splines, enabling secure transfer of power to input shaft of drive line 23. Thus, the header drive 23 and the feeder drive extension short jack shaft 24 and longer shaft 50 may be coupled via the insertion of shaft 20 into the receivable mouth 21 of header shaft 23. Cylinder 16 is actuated to pull shift fork 17 at its top end allowing its bottom end to shift shaft 20 into socket 21.

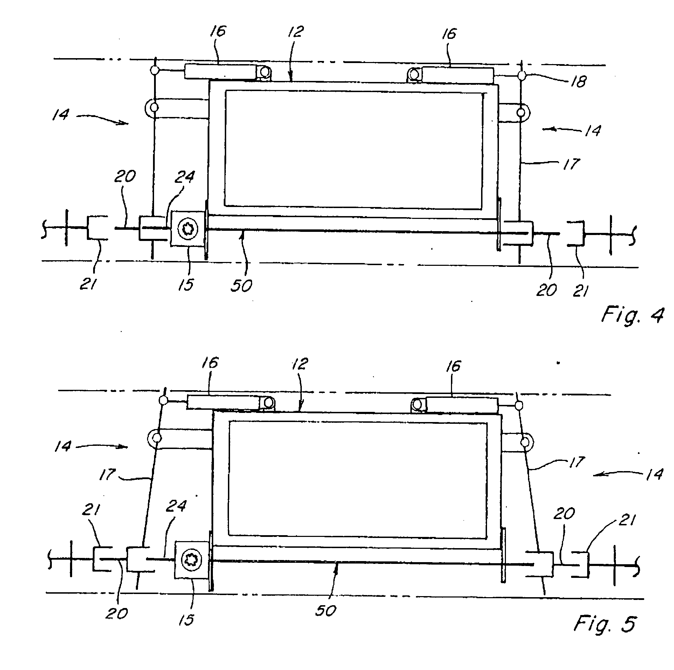

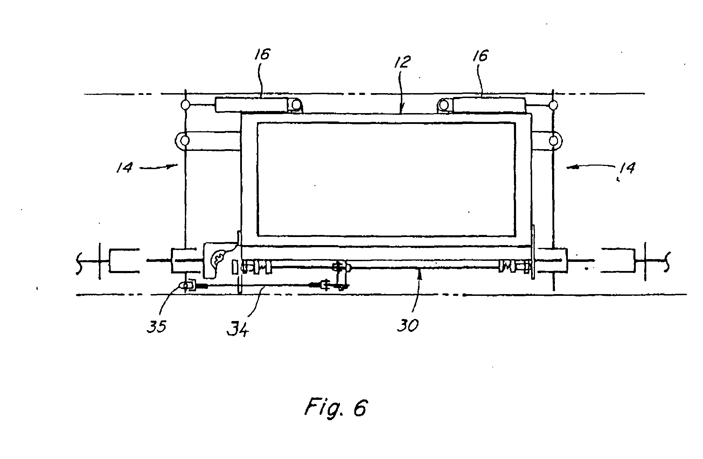

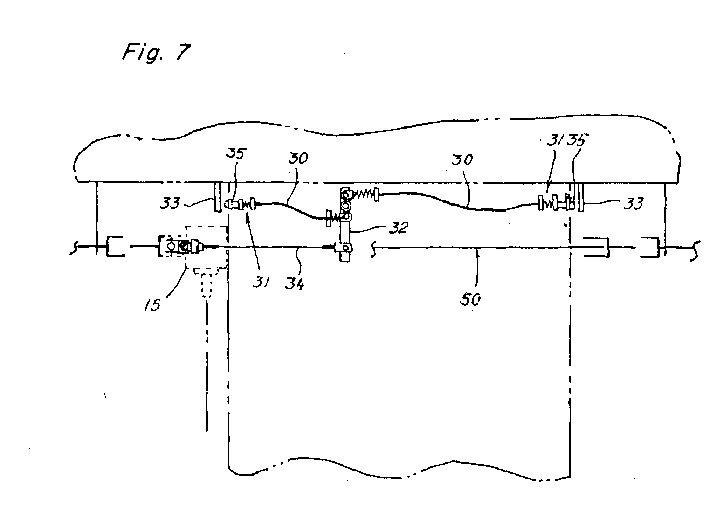

Figures 4 and 5 are schematic front views of the feeder housing 12 interface together with the coupling and latching devices generally shown at 14. As can be seen in Figure 4, prior to actuation of cylinder 16, when shift fork 17 is at rest, 20 and 21 are uncoupled. As can be seen in Figure 5, once cylinder 16 is actuated, causing shift fork 17 to shift, then shaft 20 couples with the socket of coupling member 21. These actions are complemented with the coinciding action of the latch cable 30 as can be seen in Figures 6 and 7, which is in an unlatched position in Figure 6 but will move into latched position by virtue of pin 35 which will move laterally to latch with the header hooks 37 upon actuation of cylinder 16. The pin 35 is biased outwardly, to its latching position, by a compression spring 31. Latch cable 30 is a Bowden type cable and has one end connected to pin 35 and the other end to a pivot arm 32 arranged below feeder 12. Pivot arm 32 is connected by a further cable 34 to a movable element of shift fork assembly 14, e.g. to shift fork 17, for joint latching of the header and coupling of the header drive by cylinder 16.

Although the invention has been described in its preferred form with a certain degree of particularity, it is understood that the structure of the preferred form may be changed in the details of construction in that the combination and arrangement of parts may be modified without departing from the scope of the invention as is defined by the accompanying claims. Additional concepts based upon this description may be employed in other embodiments without departing from this scope of the invention.

## Claims

1. A combination of an agricultural harvesting machine (10) and a header (13), comprising:
an in-line gearbox (15) secured at a feeder interface (12) of the harvesting machine (10) and comprising a short splined jack shaft (24) extending from the gearbox (15) along a line coaxially directed towards an extension (21) of a drive shaft (23) of the header (13); and
a remote latching and drive-coupling device for connecting the header (13) to the feeder interface (12),
**characterised in that**:
the in-line gearbox (15) is fixedly secured against motion which would be coaxial with the short jack shaft (24) extending therefrom; and
the drive-coupling device comprises:
a first coupling member (20, 36) extending from the short splined jack shaft (24) along a line coaxially directed towards the extension (21) of the drive shaft (23) of the header (13) and comprising a matingly splined sleeve (36) having extending therefrom a jack shaft extension (20) extending in-line from said sleeve (36) along an axis coaxial with the short jack shaft (24) enabling a telescopic extension movement of the first coupling member (20, 36) telescopically extending the reach of the short jack shaft;
a second coupling member (21) constituting the extension of the drive shaft (23) of the header (13), having at its distal end an oversized mouth portion and being matingly splined to receive and secure the telescopically moving first coupling member into the second coupling member (21); and
an actuator (16) operatively connected to the first coupling member for remote control of the telescopic extension movement of the first coupling member from a cab (11) of the harvesting machine (10).

2. A combination according to claim 1, **characterised in that** the actuator (16) is connected to the first coupling member (20, 36) by a shift fork element (17) for moving the first coupling member to either engage or disengage the second coupling member (21).

3. A combination according to claim 1 or 2, **characterised in that**:
the latching and coupling device further comprises cooperating latch pins (35) and hooks (33) for locking the header (13) to the feeder interface (12); and
the latch pins (35) are actuated by the same actuator (16) that controls the telescopic extension movement of the first coupling member (20, 36).

4. A combination according to claim 3 when depending from claim 2, **characterised in that** the latch pins (35) are connected to the shift fork element (17) operable to move the first coupling member (20, 36).

5. A combination according to any of the preceding claims, **characterised in that**:
the in-line gearbox (15) further comprises a second longer shaft (50) extending coaxially and in-line with the first short jack shaft (24) from an opposite side of the gearbox (15) from which the first short jack shaft (24) extends, towards an extension of a second drive shaft (23) of the header (13), the second longer shaft (50) having a splined end; and
the drive-coupling means further comprises a further set of first and second coupling members (20, 36, 21),
the first coupling member thereof comprising a splined sleeve (36) mating with the splined end of the second longer shaft (50), and a jack shaft extension (20), and
the second coupling member (21) thereof constituting the extension of the second drive shaft (23) of the header (13), having at its distal end an oversized mouth portion and being matingly splined to receive the first coupling member (36, 20) therein.

6. A combination according to claim 5, **characterised in that** the actuator comprises distinct actuator cylinders (16) for actuating the engagement of the short jack shaft (24) and the engagement of the longer shaft (50).

7. A combination according to claim 5, **characterised in that** the actuator comprises a single actuator cylinder (16) for actuating the engagement of the short jack shaft (24) and the engagement of the longer shaft (50).

## Patentansprüche

1. Kombination einer landwirtschaftlichen Erntemaschine (10) und eines Vorsatzgerätes (13), mit:
einem zwischengeschalteten Getriebegehäuse (15), das an einer Zuführungsvorrichtungs-Grenzfläche (12) der Erntemaschine (10) befestigt ist und eine kurze, mit einer Verzahnung versehene Welle (24) umfasst, die sich von dem Getriebegehäuse (15) entlang einer Linie erstreckt, die koaxial in Richtung auf eine Verlängerung (21) einer Antriebswelle (23) des Vorsatzgerätes (13) gerichtet ist; und
einer entfernt angerordneten Verriegelungs- und Antriebskupplungs-Vorrichtung zum Verbinden des Vorsatzgerätes (13) mit der Zuführungsvorrichtungs-Grenzfläche (12),
**dadurch gekennzeichnet, dass**:
die das zwischengeschaltete Getriebegehäuse (15) fest gegen eine Bewegung befestigt ist, die koaxial zu der sich von diesem erstreckenden kurzen Zwischenwelle (24) ist; und
die Antriebs-Kupplungsvorrichtung Folgendes umfasst:
ein erstes Kupplungsteil (20, 36), dass sich von der kurzen, mit Verzahnung versehenen Zwischenwelle (24) entlang einer Linie erstreckt, die koaxial in Richtung auf die Verlängerung (21) der Antriebswelle (23) des Vorsatzgerätes (13) gerichtet ist und eine mit einer zusammenpassenden Verzahnung versehene Hülse (36) umfasst, die eine sich von dieser aus erstreckende Zwischenwellen-Verlängerung (20) aufweist, die sich in einer Linie von der Hülse (36) entlang einer Achse koaxial zu der kurzen Zwischenwelle (24) erstreckt und eine Teleskop-Ausfahrbewegung des ersten Kupplungsteils (20, 36) in telekopartiger Weise ermöglicht, um die Reichweite der kurzen Zwischenwelle zu erstrecken;
ein zweites Kupplungsteil (21), das die Verlängerung der Antriebswelle (23) des Vorsatzgerätes (13) darstellt, an seinem fernliegenden Ende einen ein Übermaß aufweisenden Mündungsteil aufweist und in zusammenpassender Weise mit einer Verzahnung versehen ist, um das teleskopartig bewegliche erste Kupplungsteil in dem zweiten Kupplungsteil (21) aufzunehmen und festzulegen; und
eine Betätigungsvorrichtung (16) betriebsmäßig mit dem ersten Kupplungsteil für eine Fernsteuerung der telekopartigen Ausfahrbewegung des ersten Kupplungsteils von einer Kabine (11) der Erntemaschine (10) aus verbunden ist.

2. Kombination nach Anspruch 1, **dadurch gekennzeichnet, dass** die Betätigungsvorrichtung (16) mit dem ersten Kupplungsteil (20, 36) über ein Schaltgabel-Element (17) zum Bewegen des ersten Kupplungsteils zum Einkuppeln oder Auskuppeln des zweiten Kupplungsteils (21) verbunden ist.

3. Kombination nach Anspruch 1 oder 2, **dadurch gekennzeichnet, dass**:
die Verriegelungs- und Kupplungsvorrichtung weiterhin zusammenwirkende Verriegelungsbolzen (35) und Haken (33) zum Verriegeln des Vorsatzgerätes (13) an der Zuführungsvorrichtungs-Grenzfläche (12) umfasst; und
die Verriegelungsbolzen (35) durch die gleiche Betätigungsvorrichtung (16) betätigt werden, die die telekopartige Ausfahrbewegung des ersten Kupplungsteils (20, 36) steuert.

4. Kombination nach Anspruch 3 unter Rückbeziehung auf Anspruch 2, **dadurch gekennzeichnet, dass** die Verriegelungsbolzen (35) mit dem Schaltgabel-Element (17) verbunden sind, das zur Bewegung des ersten Kupplungsteils (20, 36) betätigbar ist.

5. Kombination nach einem der vorhergehenden Ansprüche, **dadurch gekennzeichnet, dass**:
das zwischengeschaltete Getriebegehäuse (15) weiterhin eine zweite längere Welle (50) umfasst, die sich koaxial und in einer Linie mit der ersten kurzen Zwischenwelle (24) und von der Seite des Getriebegehäuses (15), die entgegengesetzt zu der Seite ist, von der sich die erste kurze Zwischenwelle (24) erstreckt, in Richtung auf eine Verlängerung einer zweiten Antriebswelle (23) des Vorsatzgerätes (13) erstreckt, wobei die zweite längere Welle (50) ein mit einer Verzahnung versehenes Ende aufweist; und
die Antriebkupplungsvorrichtung weiterhin einen weiteren Satz von ersten und zweiten Kupplungsteilen (20, 36, 21) umfasst,
wobei der erste Kupplungsteil hiervon eine mit einer Verzahnung versehene Hülse (36), die mit dem mit Verzahnung versehenen Ende der zweiten längeren Welle (50) und einer Zwischenwellen-Verlängerung (20) zusammenpasst, und
der zweite Kupplungsteil (21) eine Verlängerung der zweiten Antriebswelle (23) des Vorsatzgerätes (13) bildet die an ihrem fernliegenden Ende einen ein Übermaß aufweisenden Mündungsteil aufweist und mit einer passenden Verzahnung versehen ist, um den ersten Kupplungsteil (36, 20) hierin aufzunehmen.

6. Kombination nach Anspruch 5, **dadurch gekennzeichnet, dass** die Betätigungsvorrichtung getrennte Betätigungszylinder (16) zur Betätigung des Einkuppelns der kurzen Zwischenwelle (24) und des Einkuppelns der längeren Welle (50) umfasst.

7. Kombination nach Anspruch 5, **dadurch gekennzeichnet, dass** die Betätigungsvorrichtung einen einzigen Betätigungszylinder (16) zum Betätigen des Einkuppelns der kurzen Zwischenwelle (24) und des Einkuppelns der längeren Welle (50) umfasst.

## Revendications

1. Combinaison d'une machine de récolte agricole (10) et d'une tête de coupe (13), comprenant :
un réducteur coaxial (15) fixé à une jonction du dispositif d'alimentation (12) de la machine de récolte (10) et comprenant un arbre intermédiaire court et cannelé (24) s'étendant du réducteur (15) le long d'une ligne dirigée coaxialement vers un prolongement (21) d'un arbre d'entraînement (23) de la tête de coupe (13), et
un dispositif de verrouillage à distance et d'accouplement d'entraînement pour accoupler la tête de coupe (13) à la jonction du dispositif d'alimentation (12),
**caractérisée en ce que** :
le réducteur coaxial (15) est fermement protégé contre un mouvement qui serait coaxial avec l'arbre intermédiaire court (24) s'étendant à partir de celui-ci et
le dispositif d'accouplement d'entraînement comprend :
un premier élément d'accouplement (20, 36) s'étendant de l'arbre intermédiaire court cannelé (24) le long d'une ligne orientée coaxialement vers le prolongement (21) de l'arbre d'entraînement (23) de la tête de coupe (13) et comprenant un manchon cannelé pour accouplement (36) comportant, s'étendant à partir de celui-ci, un prolongement d'arbre intermédiaire (20) s'étendant coaxialement audit manchon (36) le long d'un axe coaxial à l'arbre intermédiaire court (24) et permettant un mouvement d'extension télescopique du premier élément d'accouplement (20, 36) prolongeant télescopiquement la portée de l'arbre intermédiaire court,
un second élément d'accouplement (21) constituant le prolongement de l'arbre d'entraînement (23) de la tête de coupe (13), comportant à son extrémité distale une portion d'embouchure surdimensionnée et étant cannelé pour accouplement pour recevoir et fixer le premier élément d'accouplement se déplaçant télescopiquement dans le second élément d'accouplement (21), et
un actionneur (16) relié opérationnellement au premier élément d'accouplement pour commander à distance le mouvement d'extension télescopique du premier élément d'accouplement à partir d'une cabine (11) de la machine de récolte (10).

2. Combinaison selon la revendication 1, **caractérisée en ce que** l'actionneur (16) est relié au premier élément d'accouplement (20, 36) par un organe de fourchette d'embrayage (17) destiné à déplacer le premier élément d'accouplement pour mettre en prise ou désengrener le second élément d'accouplement (21).

3. Combinaison selon la revendication 1 ou 2, **caractérisée en ce que** :
le dispositif de verrouillage et d'accouplement comprend en plus des goupilles de verrouillage (35) et des griffes (33) coopérant pour verrouiller la tête de coupe (13) à la jonction du dispositif d'alimentation (12), et
les goupilles de verrouillage (35) sont actionnées par le même actionneur (16) qui commande le mouvement d'extension télescopique du premier élément de couplage (20, 36).

4. Combinaison selon la revendication 3 lorsqu'elle est dépendante de la revendication 2, **caractérisée en ce que** les goupilles de verrouillage (35) sont reliées à l'organe de fourchette d'embrayage (17) opérationnel pour déplacer le premier élément d'accouplement (20, 36).

5. Combinaison selon l'une quelconque des revendications précédentes, **caractérisée en ce que** :
le réducteur coaxial (15) comprend en plus un second arbre plus long (50) s'étendant coaxialement et en ligne avec le premier arbre intermédiaire court (24) d'un côté opposé du réducteur (15) à partir duquel le premier arbre intermédiaire court (24) s'étend, vers une extension d'un second arbre d'entraînement (23) de la tête de coupe (13), le second arbre plus long (50) ayant une extrémité cannelée, et
le dispositif d'accouplement d'entraînement comprend en plus un ensemble complémentaire d'un premier et d'un second éléments d'accouplement (20, 36, 21),
le premier élément d'accouplement d'entre eux comprenant un manchon cannelé (36) accouplant l'extrémité cannelée du second arbre plus long (50), et un prolongement d'arbre intermédiaire (20), et
le second élément d'accouplement (21) d'entre eux constituant le prolongement du second arbre d'entraînement (23) de la tête de coupe (13), comportant à son extrémité distale une portion d'embouchure surdimensionnée et étant cannelé pour accouplement pour recevoir le premier élément d'accouplement (36, 20).

6. Combinaison selon la revendication 5, **caractérisée en ce que** l'actionneur comprend des vérins distincts (16) destinés à actionner l'engrènement de l'arbre intermédiaire court (24) et l'engrènement de l'arbre plus long (50).

7. Combinaison selon la revendication 5, **caractérisée en ce que** l'actionneur comprend un seul vérin (16) destiné à actionner l'engrènement de l'arbre intermédiaire court (24) et l'engrènement de l'arbre plus long (50).
